# EUROPÄISCHE PATENTSCHRIFT

(11) **EP 1 805 582 B1**
(45) Veröffentlichungstag und Bekanntmachung des Hinweises auf die Patenterteilung: **08.08.2012**
(21) Anmeldenummer: 05796565.9
(22) Anmeldetag: 04.10.2005
(51) Int. Cl.: G06F 3/033, G06F 3/01

(54) **VORRICHTUNG ZUR GEWINNUNG VON DATEN ÜBER DIE BEWEGUNG EINER HAND**
DEVICE FOR EXTRACTING DATA BY HAND MOVEMENT
DISPOSITIF DE COLLECTE DE DONNEES VIA LE MOUVEMENT D'UNE MAIN

(30) Priorität: 06.10.2004 DE 102004048655; 18.11.2004 DE 102004055726
(43) Veröffentlichungstag der Anmeldung: 11.07.2007
(73) Patentinhaber: Fraunhofer-Gesellschaft zur Förderung der angewandten Forschung e.V., 80686 München (DE)
(72) Erfinder: Axel Blonski, 69118 Heidelberg (DE)
(74) Vertreter: Meyer-Roedern, Giso
(86) Internationale Anmeldenummer: PCT/DE2005/001766
(87) Internationale Veröffentlichungsnummer: WO 2006/037305

(56) Entgegenhaltungen:
- EP-A- 0 750 249
- US-A- 3 919 691

## Beschreibung

Die Erfindung betrifft eine Vorrichtung zur Gewinnung von Daten über die Bewegung einer Hand.

Eine solche Vorrichtung ist als Computermaus allgemein bekannt. Die Maus wird mit einer Hand bedient. Ihre Verschiebebewegung auf einer ebenen Unterlage wird zweidimensional erfaßt und in Daten umgesetzt, die zur Steuerung der Bewegung eines Cursors über die Bildebene eines Monitors dienen. Die Maus hat Tasten für den linken und rechten Mausklick, der mit dem Zeigefinger bzw. Mittelfinger ausgeführt wird. Bei einer sog. Scrollmaus ist zur Dateneingabe überdies ein Drehstellknopf zwischen den Tasten vorgesehen.

Aufgabe der Erfindung ist es, eine universelle Schnittstelle zwischen einem Menschen und einem von ihm gesteuerten Apparat oder System zu schaffen, die die Geschicklichkeit der menschlichen Handbewegung optimal nutzt.

Die diese Aufgabe lösende Vorrichtung setzt die Bewegung einer menschlichen Hand in allen drei Raumrichtungen zur Gewinnung von Daten um. Die Vorrichtung hat eine Aufnahme für die Hand, die an einer ein kartesisches Koordinatensystem aufspannenden, biege- und verwindungssteifen x-y-z-Linearführung mit drei paarweise zueinander orthogonalen, in x-, y- und z-Achsrichtung zueinander verschieblichen Führungsschienen angebracht ist. Die Führungsschienen sollten eine möglichst geringe Reibung in Schieberichtung, hohe Biegesteifigkeit und hohe Verwindungssteifigkeit haben. Die Vorrichtung ist mit Wegsignalgebern für die translatorischen Bewegungskomponenten der Aufnahme in x-, y- und z-Achsrichtung der Führungsschienen versehen. Für eine derartige Vorrichtung sind die US-A-3 919 691 und EP-A-0 750 249 einschlägig.

Eine jede Linearführungsschiene hat im allgemeinen die Eigenschaft, fünf Freiheitsgrade, nämlich zwei translatorische Freiheitsgrade und drei Drehfreiheitsgrade zu deaktivieren und nur einen translatorischen Freiheitsgrad übrig zu lassen. Mit welchem inneren Aufbau der Linearführungsschiene das erreicht wird, ist für die Erfindung nicht erheblich; man denke beispielsweise an zwei parallele Führungsstangen und einen Läufer mit Gleit- oder Rollführung daran.

Die Erfassung der Bewegungskomponenten mit einer x-y-z-Linearführung, die ein kartesisches Koordinatensystem aufspannt, liefert besonders einfach weiterzuverarbeitende Daten. Wohlgemerkt lassen sich Trajektorien im Raum auch in anderen 3D-Koordinaten darstellen, beispielsweise Koordinaten basierend auf einen nicht orthogonalen Vektortripel, Zylinderkoordinaten, Kugelkoordinaten. Die Umsetzung dieser Koordinaten in eine 3D-Führung ist jedoch teils sehr aufwendig, teils vermittelt sie wegen anisotropen Reibungsverhaltens kein gutes haptisches Gefühl. Ein Tripel Vektoren, deren Zwischenwinkel ein wenig von 90° abweicht, spannt ein kartesisches Koordinatensystem im Sinn der Erfindung auf.

Die Aufnahme hat Kontaktbereiche für die Handfläche und den Handrücken und einen Mittelsteg dazwischen, der zwischen zwei Fingern zu liegen kommt. Die Aufnahme weist einen Schalter auf, der durch einen Zangengriff von Daumen und Zeigefinger der in der Aufnahme ruhenden Hand betätigt wird und ein Schaltsignal liefert. Mit diesem Schalter wird ein linker Mausklick bewirkt. Damit wird die Geschicklichkeit der menschlichen Hand optimal umgesetzt.

Bei einer bevorzugten Ausführungsform weist die Vorrichtung Geber für die Position von Führungsschienen und Läufern auf, die an je einer Führungsschiene verschieblich geführt sind und ihrerseits je eine Führungsschiene tragen und/oder verschieblich führen. Führungsschienen und Läufer lassen sich kinematisch vertauschen.

Bei einer bevorzugten Ausführungsform ist eine erste Führungsschiene stationär angeordnet. An der ersten Führungsschiene ist ein erster Läufer verschieblich geführt, der eine zu der ersten Führungsschiene orthogonale zweite Führungsschiene trägt. An der zweiten Führungsschiene ist ein zweiter Läufer verschieblich geführt, an dem eine zu der ersten und zweiten Führungsschiene orthogonale dritte Führungsschiene verschieblich geführt ist. An der dritten Führungsschiene ist die Aufnahme für die Hand angebracht.

Bei einer alternativ bevorzugten Ausführungsform ist eine erste Führungsschiene stationär angeordnet. An der ersten Führungsschiene ist ein erster Läufer verschieblich geführt, der eine zu der ersten Führungsschiene orthogonale zweite Führungsschiene trägt. An der zweiten Führungsschiene ist ein zweiter Läufer verschieblich geführt, der eine zu der ersten und zweiten Führungsschiene orthogonale dritte Führungsschiene trägt. An der dritten Führungsschiene ist die Aufnahme für die Hand verschieblich geführt.

Bei einer bevorzugten Ausführungsform ist die dritte Führungsschiene gegen ein Rückstellmoment um ihre Achse drehbar und mit einem Winkelsignalgeber versehen.

Bei einer bevorzugten Ausführungsform sind die Läufer an den Führungsschienen motorisch angetrieben oder umgekehrt. Durch die Antriebsmotoren können aktive ortsabhängige Kräfte ausgeübt werden, z. B. zu Zwekken der Kraftrückkopplung, zu Eichzwecken u. a.

Bei einer bevorzugten Ausführungsform sind die Läufer an den Führungsschienen gebremst oder umgekehrt. Die Bremskraft ist vorzugsweise einstellbar, und zwar insbesondere in Abhängigkeit von der Relativposition der Führungsschienen und Läufer. Dadurch wird ein gutes Steuergefühl und eine hohe Ortsgenauigkeit erreicht.

Bei einer bevorzugten Ausführungsform ist wenigstens eine der Führungsschienen eine Rundstange.

Bei einer bevorzugten Ausführungsform weist die Aufnahme einen Schalter auf, der durch einen Zangengriff von Daumen und Mittelfinger der in der Aufnahme ruhenden Hand betätigt wird und ein Schaltsignal liefert. Mit diesem Schalter wird ein rechter Mausklick bewirkt.

Bei einer bevorzugten Ausführungsform ist die Aufnahme drehbar und mit einem Winkelsignalgeber versehen. Die Vorrichtung setzt damit Drehungen der Hand in Daten um. Es gibt Drehfreiheitsgrade um eine Achse im Unterarmgelenk und um zwei zueinander senkrechte Achsen im Handgelenk.

Die von den Wegsignalgebern, Schaltern und Winkelsignalgebern gelieferten Signale können analog oder digital, elektrisch, elektronisch, optoelektronisch oder optisch sein. Im Vordergrund des Interesses stehen Signale für die digital-elektronische Steuertechnik und Datenverarbeitung.

Die Vorrichtung hat eine bevorzugte Verwendung zur Steuerung der Bewegung eines unter visueller Beobachtung stehenden Objekts im Raum. Vorzugsweise werden die Signale der Wegsignalgeber für die translatorischen Bewegungskomponenten der Aufnahme zur Steuerung von synchronen, visuell zumindest vermeintlich im wesentlichen parallelen translatorischen Bewegungen des Objekts auf gleicher Achse und in gleicher Richtung herangezogen.

Bei einer bevorzugten Ausführungsform sind die Wegstrecken der Objektbewegung den Wegstrecken der Aufnahme proportional. Die Strecken, die das Objekt zurücklegt, können größer, gleich oder kleiner als die Strecken sein, die die in der Aufnahme ruhende Hand zurücklegt.

Bei einer bevorzugten Ausführungsform steht das Objekt unter direkter visueller Beobachtung. Diese Variante hat Anwendungen in der Handhabungs- und Bearbeitungstechnik.

Bei einer alternativ bevorzugten Ausführungsform steht das Objekt unter mikroskopischer Beobachtung. Diese Variante hat Anwendungen in der Mikrochirurgie und Neurochirurgie.

Bei einer alternativ bevorzugten Ausführungsform steht das Objekt unter endoskopischer Beobachtung. Diese Variante hat Anwendungen in der minimal-invasiven Chriurgie.

Weitere mögliche Verwendungen der Vorrichtung liegen bei einer künstlerischen Raumtrajektorienerzeugung, graphologischem und bewegungsphysiologischen Studien. Nicht zuletzt kann die Vorrichtung zur Steuerung eines Rechners dienen, insbesondere durch Beeinflussung eines Cursors auf dessen Monitor.

Die Erfindung wird im folgenden anhand von in der Zeichnung dargestellten Ausführungsbeispielen näher erläutert. Es zeigen:
- Fig. 1: eine Person, die die Bewegung eines von ihr beobachteten Objekts im Raum mit der Hand steuert;
- Fig. 2: die perspektivische Ansicht einer zu der Steuerung dienenden Vorrichtung mit einer Aufnahme für die Hand;
- Fig. 3: die perspektivische Ansicht einer abgewandelten Aufnahme;
- Fig. 4: eine Vorderansicht der Aufnahme gemäß Fig. 3;
- Fig. 5: die perspektivische Ansicht einer weiteren Aufnahme;
- Fig. 6: eine Vorderansicht der Aufnahme gemäß Fig. 5; und
- Fig. 7: ein Blockdiagramm.

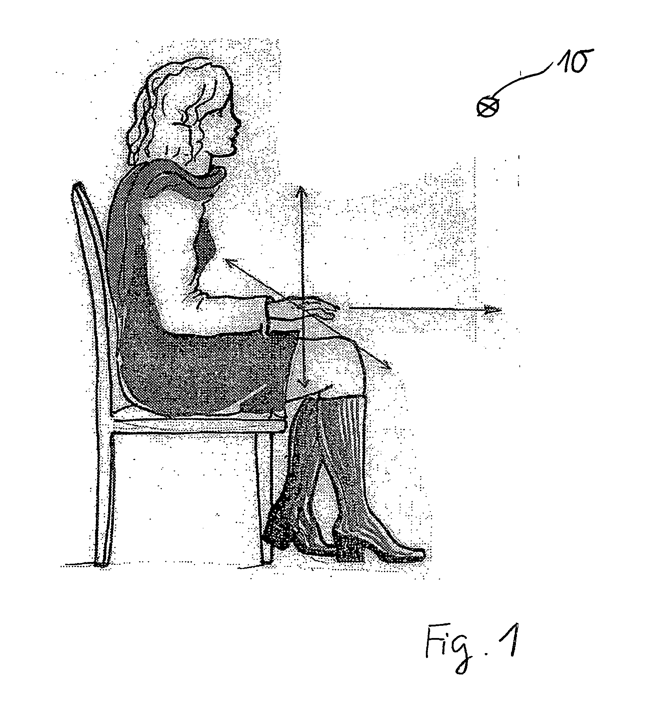

In der Darstellung Fig. 1 ist die die Bewegung eines Objekts 10 steuernde Person Rechtshänderin. Die Person hat ihren rechten Arm abgewinkelt, und sie hält ihre rechte Hand in der Luft. Die Armhaltung entspricht etwa der einer Klavierspielerin.

Die Person steuert die Bewegung des von ihr beobachteten Objekts 10 anhand von translatorischen Bewegungen ihrer Hand, die sie links-rechts, auf-ab und vor-zurück vollführt. Diese Bewegungen werden in Bewegungen des Objekts 10 auf gleicher Achse und in gleicher Richtung umgesetzt. Durch einen Zangengriff von Daumen und Zeigefinger vollführt die Person einen linken Mausklick, und durch einen Zangengriff von Daumen und Mittelfinger einen rechten Mausklick. Desweiteren wird eine Drehung der Hand erfaßt und zur Steuerung der Bewegung des Objekts 10 herangezogen.

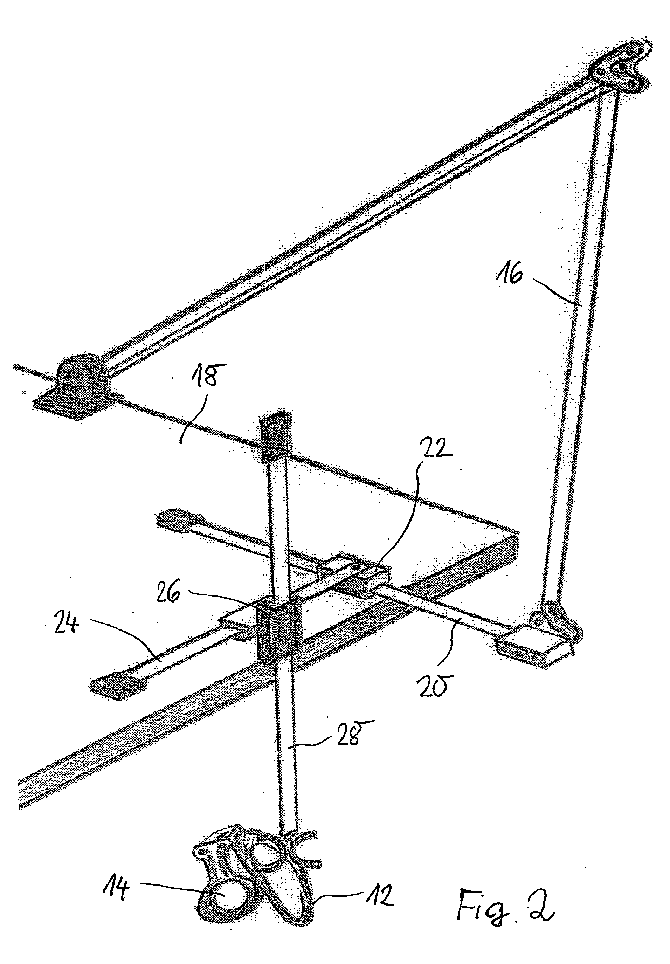

Fig. 2 zeigt eine die Handbewegungen erfassende und in die Bewegungen des Objekts 10 umsetzende Vorrichtung. Die Vorrichtung hat eine Aufnahme 12 mit Fingeröffnungen 14 für die das Objekt 10 steuernde Hand.

Die Aufnahme 12 läßt den Fingern Spiel für Zangengriffe, die die erwähnten Mausklicks bewirken.

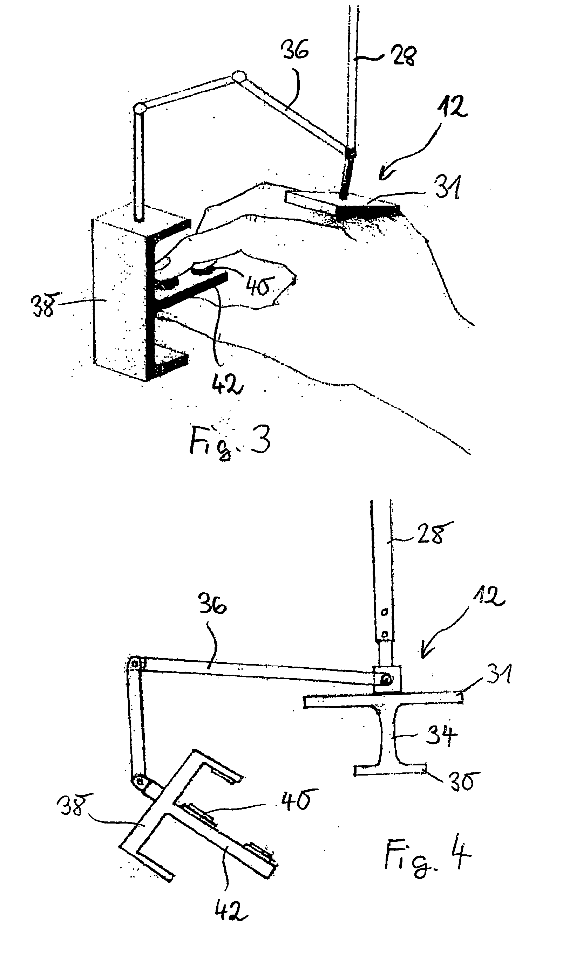

In der Ausführungsform gemäß Fig. 3 und Fig. 4 hat die Aufnahme 12 ein Doppel-T-Profil mit Kontaktplatten 30, 31 für die Handfläche und den Handrücken und mit einem Mittelsteg 34 dazwischen, der zwischen dem Mittelfinger und dem Ringfinger zu liegen kommt. An einem über den Handrücken sich erstreckenden Gelenkstab 36 sitzt ein Klick-Taster 38 in Form eines E-Profils mit zwei Kontakten 40 für Zeigefinger und Mittelfinger an der Oberseite eines verlängerten Mittelschenkels 42, der von dem Daumen untergriffen wird.

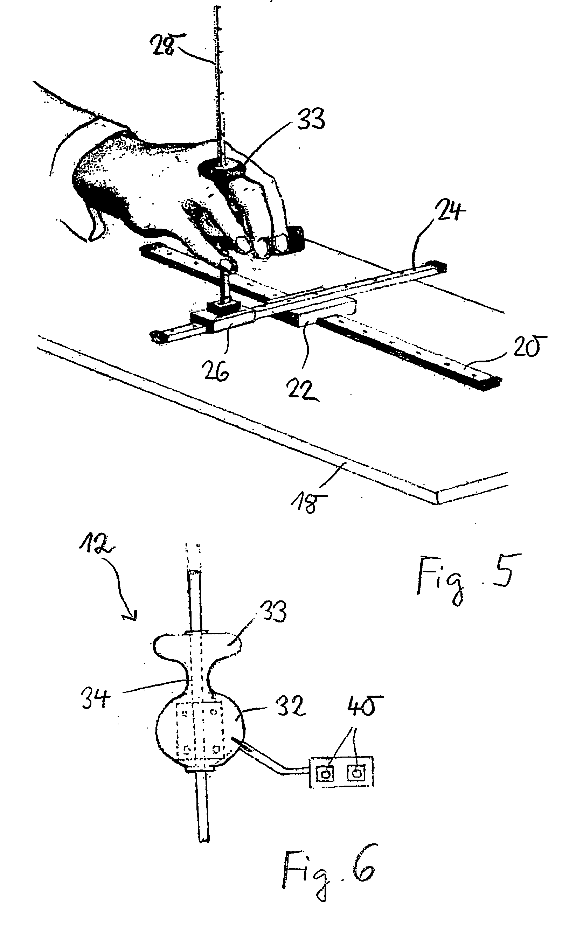

In der Ausführungsform gemäß Fig. 5 und Fig. 6 hat die Aufnahme 12 ballige Kontaktkörper 32, 33 für die Handfläche und den Handrücken.

Zurückkommend auf Fig. 2, ist die Aufnahme 12 drehbeweglich an einer kartesischen x-y-z-Führung angebracht, die mit einem abgewinkelten Arm 16 an einer Tischplatte 18 montiert ist. Ein Winkelsignalgeber erfaßt Drehungen der Aufnahme 12, die Drehungen der Hand entsprechen.

An dem Arm 16 sitzt starr die z-Schiene 20 der x-y-z-Führung, die sich vor-zurück in der Horizontalen erstreckt. An der z-Schiene 20 ist längsverstellbar ein Läufer 22 angebracht, der die x-Schiene 24 der x-y-z-Führung trägt. Die x-Schiene 24 erstreckt sich links-rechts in der Horizontalen. An der x-Schiene 24 ist längsverstellbar ein Läufer 26 angebracht, an dem die y-Schiene 28 der x-y-z-Führung längsverstellbar geführt ist. Die y-Schiene 28 erstreckt sich in der Vertikalen. An ihrem unteren Ende ist die Aufnahme 12 angebracht. Die x-Schiene 24 und z-Schiene 20 sind Linearführungsschienen.

In der Variante gemäß Fig. 5 ist die z-Schiene 20 unmittelbar an der Oberseite der Tischplatte 18 befestigt. Der Läufer 26 auf der x-Schiene 24 trägt die vertikale y-Schiene 28. Die Aufnahme 12 ist längsverstellbar an der y-Schiene 28 geführt.

Die x-y-z-Führung hat Signalgeber für die Positionen der Schienen 20, 24, 28 und Läufer 22, 26. Die Geber können potentiometrische Geber sein. Bei einer Rollenführung von Schienen 20, 24, 28 und Läufern 22, 26 kommen auch Winkeldrehgeber an den Rollen, und bei einer Zahnstangenführung Winkeldrehgeber an den Zahnrädern in Betracht.

Die Läufer 22, 26 sind an den Schienen 20, 24, 28 mit einstellbarer Bremskraft gebremst. Dazu dient eine elektromagnetische Bremse.

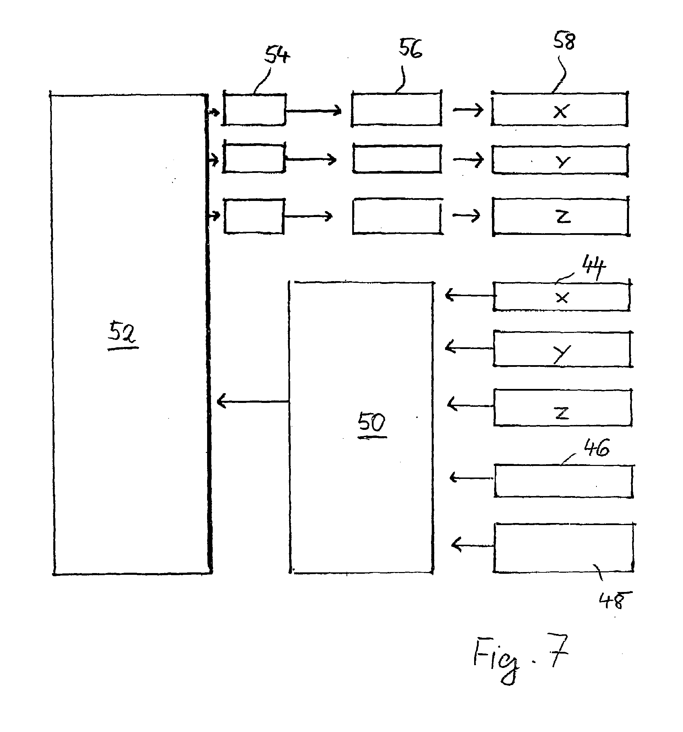

Wie das Blockdiagramm Fig. 7 zeigt, werden Wegcodierungen 44 x, y, z, eine Drehwinkelcodierung 46 und weitere Daten 48, insbesondere die Mausklicks, als serielle Codierungen in ein Datenprotokoll 50 gegeben und dem Computer 52 überstellt. Dieser liefert an Analogausgängen 54 mit Leistungsstufen 56 Steuersignale für die Bremsen 58 x, y, z.

### Liste der Bezugszeichen

- 10: Objekt
- 12: Aufnahme
- 14: Fingeröffnung
- 16: Arm
- 18: Tischplatte
- 20: z-Schiene
- 22: Läufer
- 24: x-Schiene
- 26: Läufer
- 28: y-Schiene
- 30: Kontaktplatte
- 31: Kontaktplatte
- 32: Kontaktkörper
- 33: Kontaktkörper
- 34: Mittelsteg
- 36: Gelenkstab
- 38: Klick-Taster
- 40: Kontakt
- 42: Mittelschenkel
- 44: Wegcodierung
- 46: Drehwinkelcodierung
- 48: Mausklick
- 50: Datenprotokoll
- 52: Computer
- 54: Analogausgang
- 56: Leistungsstufe
- 58: Bremse

## Patentansprüche

1. Vorrichtung zur Gewinnung von Daten über die Bewegung einer Hand in allen drei Raumrichtungen mit einer Aufnahme (12) für die Hand, die an einer ein kartesisches Koordinatensystem aufspannenden, biege- und verwindungssteifen x-y-z-Linearführung mit drei paarweise zueinander orthogonalen, in x-, y- und z-Achsrichtung zueinander verschieblichen Führungsschienen (20, 24, 28) angelracht ist, und mit Wegsignalgebern für die translatorischen Bewegungskomponenten der Aufnahme (12) in x-, y- und z-Achsrichtung der Führungsschienen (20, 24, 28), **dadurch gekennzeichnet, daß** die Aufnahme (12) Kontaktbereiche (30 - 33) für die Handfläche und den Handrücken und einen Mittelsteg (34) dazwischen hat, der zwischen zwei Fingern zu liegen kommt, und einen Schalter aufweist, der durch einen Zangengriff von Daumen und Zeigefinger der in der Aufnahme (12) ruhenden Hand betätigbar ist und ein Schaltsignal liefert.

2. Vorrichtung nach Anspruch 1, **dadurch gekennzeichnet, daß** sie Geber für die Position von Führungsschienen (20, 24, 28) und Läufern (22, 26) aufweist, die an je einer Führungsschiene (20, 24, 28) verschieblich geführt sind und ihrerseits je eine Führungsschiene (24, 28) tragen und/oder verschieblich führen.

3. Vorrichtung nach Anspruch 2, **dadurch gekennzeichnet, daß** eine erste Führungsschiene (20) stationär angeordnet ist, daß an der ersten Führungsschiene (20) ein erster Läufer (22) verschieblich geführt ist, der eine zu der ersten Führungsschiene (20) orthogonale zweite Führungsschiene (24) trägt, daß an der zweiten Führungsschiene (24) ein zweiter Läufer (26) verschieblich geführt ist, an dem eine zu der ersten und zweiten Führungsschiene (20, 24) orthogonale dritte Führungsschiene (28) verschieblich geführt ist, und daß die Aufnahme (12) für die Hand an der dritten Führungsschiene (28) angebracht ist.

4. Vorrichtung nach Anspruch 2, **dadurch gekennzeichnet, daß** eine erste Führungsschiene (20) stationär angeordnet ist, daß an der ersten Führungsschiene (20) ein erster Läufer (22) verschieblich geführt ist, der eine zu der ersten Führungsschiene (20) orthogonale zweite Führungsschiene (24) trägt, daß an der zweiten Führungsschiene (24) ein zweiter Läufer (26) verschieblich geführt ist, der eine zu der ersten und zweiten Führungsschiene (20, 24) orthogonale dritte Führungsschiene (28) trägt, und daß die Aufnahme (12) für die Hand an der dritten Führungsschiene (28) verschieblich geführt ist.

5. Vorrichtung nach Anspruch 3 oder 4, **dadurch gekennzeichnet, daß** die dritte Führungsschiene (28) gegen ein Rückstellmoment um ihre Achse drehbar und mit einem Winkelsignalgeber versehen ist.

6. Vorrichtung nach einem der Ansprüche 2 bis 5, **dadurch gekennzeichnet, daß** die Läufer (22, 26) an den Führungsschienen (20, 24, 28) motorisch angetrieben sind oder umgekehrt.

7. Vorrichtung nach einem der Ansprüche 2 bis 6, **dadurch gekennzeichnet, daß** die Läufer (22, 26) an den Führungsschienen (20, 24, 28) gebremst sind oder umgekehrt.

8. Vorrichtung nach Anspruch 7, **dadurch gekennzeichnet, daß** die Bremskraft einstellbar ist, vorzugsweise in Abhängigkeit von der Relativposition der Führungsschienen (20, 24, 28) und Läufer (22, 26).

9. Vorrichtung nach einem der Ansprüche 2 bis 8, **dadurch gekennzeichnet, daß** wenigstens eine Führungsschiene (20, 24, 28) eine Rundstange ist.

10. Vorrichtung nach einem der Ansprüche 1 bis 9, **dadurch gekennzeichnet, daß** die Aufnahme (12) ein Doppel-T-Profil mit Kontaktplatten (30, 31) für die Handfläche und den Handrücken hat.

11. Vorrichtung nach einem der Ansprüche 1 bis 9, **dadurch gekennzeichnet, daß** die Aufnahme (12) ballige Kontaktkörper (32, 33) für die Handfläche und den Handrücken hat.

12. Vorrichtung nach einem der Ansprüche 1 bis 11, **dadurch gekennzeichnet, daß** die Aufnahme (12) einen Schalter aufweist, der durch einen Zangengriff von Daumen und Mittelfinger der in der Aufnahme (12) ruhenden Hand betätigbar ist und ein Schaltsignal liefert.

13. Vorrichtung nach einem der Ansprüche 1 bis 12, **dadurch gekennzeichnet, daß** die Aufnahme (12) drehbar und mit einem Winkelsignalgeber versehen ist.

14. Verwendung einer Vorrichtung nach einem der Ansprüche 1 bis 13 zur Steuerung der Bewegung eines unter visueller Beobachtung stehenden Objekts (10) im Raum.

15. Verwendung nach Anspruch 14, **dadurch gekennzeichnet, daß** die Signale der Wegsignalgeber für die translatorischen Bewegungskomponenten der Aufnahme (12) zur Steuerung von synchronen, visuell zumindest vermeintlich im wesentlichen parallelen translatorischen Bewegungen des Objekts (10) auf gleicher Achse und in gleicher Richtung herangezogen werden.

16. Verwendung nach Anspruch 14 oder 15, **dadurch gekennzeichnet, daß** die Wegstrecken der Objektbewegung den Wegstrecken der Aufnahme (12) proportional sind.

17. Verwendung nach einem der Ansprüche 14 bis 16, **dadurch gekennzeichnet, daß** das Objekt (10) unter direkter visueller Beobachtung steht.

18. Verwendung nach einem der Ansprüche 14 bis 16, **dadurch gekennzeichnet, daß** das Objekt (10) unter mikroskopischer Beobachtung steht.

19. Verwendung nach einem der Ansprüche 14 bis 16, **dadurch gekennzeichnet, daß** das Objekt (10) unter endoskopischer Beobachtung steht.

20. Verwendung einer Vorrichtung nach einem der Ansprüche 1 bis 13 zu einer künstlerischen Raumtrajektorienerzeugung.

21. Verwendung einer Vorrichtung nach einem der Ansprüche 1 bis 13 zu graphologischen Studien.

22. Verwendung einer Vorrichtung nach einem der Ansprüche 1 bis 13 zu bewegungsphysiologischen Studien.

23. Verwendung einer Vorrichtung nach einem der Ansprüche 1 bis 13 zur Steuerung eines Rechners, insbesondere durch Beeinflussung eines Cursors auf dessen Monitor.

## Claims

1. Device for extracting data by way of hand movement in all three spatial directions, having an accommodation (12) for the hand, which is affixed to an x-y-z linear guide that describes a Cartesian coordinate system, is resistant to bending and torsion, and has three guide rails (20, 24, 28) that are orthogonal relative to one another, in pairs, and displaceable relative to one another in the x, y, and z axis direction, and having path transducers for the translatory movement components of the accommodation (12) in the x, y, and z axis direction of the guide rails (20, 24, 28), **characterized in that** the accommodation (12) has contact regions (30 - 33) for the palm and the back of the hand, and has a center crosspiece (34) in between, which comes to lie between two fingers, and has a switch that is activated by means of a vise grip of thumb and index finger of the hand resting in the accommodation (12), and yields a switching signal.

2. Device according to claim 1, **characterized in that** it has sensors for the position of guide rails (20, 24, 28) and runners (22, 26), which are guided in displaceable manner, one on each guide rail (20, 24, 28), and in turn each carry and/or displaceably guide a guide rail (24, 28).

3. Device according to claim 2, **characterized in that** a first guide rail (20) is disposed in stationary manner, that a first runner (22) is guided displaceably on the first guide rail (20), and carries a second guide rail (24) that is orthogonal to the first guide rail (20), that a second runner (26) is displaceably guided on the second guide rail (24), and a third guide rail (28), orthogonal to the first and second guide rail (20, 24), is guided displaceably on it, and that the accommodation (12) for the hand is affixed to the third guide rail (28).

4. Device according to claim 2, **characterized in that** a first guide rail (20) is disposed in stationary manner, that a first runner (22) is guided displaceably on the first guide rail (20), and carries a second guide rail (24) that is orthogonal to the first guide rail (20), that a second runner (26) is displaceably guided on the second guide rail (24), and carries a third guide rail (28), orthogonal to the first and second guide rail (20, 24), and that the accommodation (12) for the hand is displaceably guided on the third guide rail (28).

5. Device according to claim 3 or 4, **characterized in that** the third guide rail (28) can be rotated about its axis, counter to a re-set moment, and is provided with an angle transducer.

6. Device according to one of claims 2 to 5, **characterized in that** the runners (22, 26) are driven on the guide rails (20, 24, 28) by motors, or vice versa.

7. Device according to one of claims 2 to 6, **characterized in that** the runners (22, 26) are braked on the guide rails (20, 24, 28), or vice versa.

8. Device according to claim 7, **characterized in that** the braking force is adjustable, preferably specifically as a function of the relative position of the guide rails (20, 24, 28) and runners (22, 26) .

9. Device according to one of claims 2 to 8, **characterized in that** at least one of the guide rails (20, 24, 28) is a round rod.

10. Device according to one of claims 1 to 9, **characterized in that** the accommodation (12) has a double-T profile having contact plates (30, 31) for the palm and the back of the hand.

11. Device according to one of claims 1 to 9, **characterized in that** the accommodation (12) has ball-shaped contact bodies (32, 33) for the palm and the back of the hand.

12. Device according to one of claims 1 to 11, **characterized in that** the accommodation (12) has a switch that is activated by means of a vise grip of thumb and middle finger of the hand resting in the accommodation (12), and yields a switching signal.

13. Device according to one of claims 1 to 12, **characterized in that** the accommodation (12) can rotate and is provided with an angle transducer.

14. Use of a device according to one of claims 1 to 13 for controlling the movement of an object (10) in space that is under visual observation.

15. Use according to claim 14, **characterized in that** the signals of the path transducers for the translatory movement components of the accommodation (12) are utilized for controlling synchronous translatory movements of the object (10), which movements are at least felt to be essentially parallel visually, on the same axis and in the same direction.

16. Use according to claim 14 or 15, **characterized in that** the path distances of the object movement are proportional to the path distances of the accommodation (12).

17. Use according to one of claims 14 to 16, **characterized in that** the object (10) stands under direct visual observation.

18. Use according to one of claims 14 to 16, **characterized in that** the object (10) stands under microscopic observation.

19. Use according to one of claims 14 to 16, **characterized in that** the object (10) stands under endoscopic observation.

20. Use of a device according to one of claims 1 to 13 for an artistic spatial trajectory production.

21. Use of a device according to one of claims 1 to 13 for graphological studies.

22. Use of a device according to one of claims 1 to 13 for movement-physiological studies.

23. Use of a device according to one of claims 1 to 13 for controlling a computer, particularly by means of influencing a cursor on the monitor of the latter.

## Revendications

1. Dispositif pour obtenir des données via le mouvement d'une main dans l'ensemble des trois directions de l'espace comprenant un logement (12) pour la main, qui est placé sur un guide linéaire x-y-z sous-tendant un système de coordonnées cartésiennes, rigide en flexion et en torsion, doté de trois rails de guidage (20, 24, 28) perpendiculaires par paires les uns par rapport aux autres, pouvant coulisser dans les directions d'axe x, y et z les uns par rapport aux autres, et doté d'émetteurs de signaux de course pour les composants de mouvement par translation du logement (12) dans les directions d'axe x, y et z des rails de guidage (20, 24, 28), **caractérisé en ce que** le logement (12) présente des zones de contact (30 à 33) pour la paume de la main et le revers de la main et une barrette centrale (34) entre les deux, qui vient se situer entre deux doigts, et présente un commutateur qui peut être actionné par une prise en tenaille du pouce et de l'index de la main reposant dans le logement (12) et délivre un signal de commutation.

2. Dispositif selon la revendication 1, **caractérisé en ce qu'**il comporte des émetteurs pour la position de rails de guidage (20, 24, 28) et des curseurs (22, 26), qui sont guidés chacun de façon coulissante sur un rail de guidage (20, 24, 28) et portent et/ou guident chacun de façon coulissante un rail de guidage (24, 28).

3. Dispositif selon la revendication 2, **caractérisé en ce qu'**un premier rail de guidage (20) est disposé de façon fixe, **en ce qu'**un premier curseur (22) est guidé de façon coulissante sur le premier rail de guidage (20), lequel curseur (22) porte un second rail de guidage (24) perpendiculaire au premier rail de guidage (20), **en ce qu'**un second curseur (26) est guidé de façon coulissante sur le second rail de guidage (24), curseur (26) sur lequel un troisième rail de guidage (28) perpendiculaire au premier et au second rail de guidage (20, 24) est guidé de façon coulissante, et **en ce que** le logement (12) pour la main est placé sur le troisième rail de guidage (28).

4. Dispositif selon la revendication 2, **caractérisé en ce qu'**un premier rail de guidage (20) est disposé de façon fixe, **en ce qu'**un premier curseur (22) est guidé de façon coulissante sur le premier rail de guidage (20), lequel curseur (22) porte un second rail de guidage (24) perpendiculaire au premier rail de guidage (20), **en ce qu'**un second curseur (26) est guidé de façon coulissante sur le second rail de guidage (24), lequel curseur (26) porte un troisième rail de guidage (28) perpendiculaire au premier et au second rail de guidage (20, 24), et **en ce que** le logement (12) pour la main est guidé de façon coulissante sur le troisième rail de guidage (28).

5. Dispositif selon la revendication 3 ou 4, **caractérisé en ce que** le troisième rail de guidage (28) peut tourner dans le sens contraire à un moment de rappel autour de son axe et est doté d'un capteur de signal d'angle.

6. Dispositif selon l'une des revendications 2 à 5, **caractérisé en ce que** les curseurs (22, 26) sont entraînés par moteur sur les rails de guidage (20, 24, 28) ou inversement.

7. Dispositif selon l'une des revendications 2 à 6, **caractérisé en ce que** les curseurs (22, 26) sont freinés sur les rails de guidage (20, 24, 28) ou inversement.

8. Dispositif selon la revendication 7, **caractérisé en ce que** la force de freinage est réglable, de préférence en fonction de la position relative des rails de guidage (20, 24, 28) et des curseurs (22, 26).

9. Dispositif selon l'une des revendications 2 à 8, **caractérisé en ce qu'**au moins un rail de guidage (20, 24, 28) est une barre ronde.

10. Dispositif selon l'une des revendications 1 à 9, **caractérisé en ce que** le logement (12) présente un profil en double T avec plaques de contact (30, 31) pour la paume et le revers de la main.

11. Dispositif selon l'une des revendications 1 à 9, **caractérisé en ce que** le logement (12) présente des corps de contact (32, 33) bombés pour la paume et le revers de la main.

12. Dispositif selon l'une des revendications 1 à 11, **caractérisé en ce que** le logement (12) comporte un commutateur qui peut être actionné par une prise en tenaille du pouce et du majeur de la main reposant dans le logement (12) et procure un signal de commutation.

13. Dispositif selon l'une des revendications 1 à 12, **caractérisé en ce que** le logement (12) peut tourner et est doté d'un capteur de signal d'angle.

14. Utilisation d'un dispositif selon l'une des revendications 1 à 13 pour la commande du mouvement d'un objet (10) se trouvant sous observation visuelle dans l'espace.

15. Utilisation selon la revendication 14, **caractérisée en ce que** les signaux des capteurs de signaux de course sont utilisés pour les composants de mouvement par translation du logement (12) pour la commande de mouvements synchrones par translation, supposés au moins sensiblement parallèles au plan visuel, de l'objet (10) sur le même axe et dans la même direction.

16. Utilisation selon la revendication 14 ou 15, **caractérisée en ce que** les tronçons de course du mouvement de l'objet (10) sont proportionnels aux tronçons de course du logement (12).

17. Utilisation selon l'une des revendications 14 à 16, **caractérisée en ce que** l'objet (10) est placé sous observation visuelle directe.

18. Utilisation selon l'une des revendications 14 à 16, **caractérisée en ce que** l'objet (10) est placé sous observation microscopique.

19. Utilisation selon l'une des revendications 14 à 16, **caractérisée en ce que** l'objet (10) est placé sous observation endoscopique.

20. Utilisation d'un dispositif selon l'une des revendications 1 à 13 pour produire de façon artificielle une trajectoire dans l'espace.

21. Utilisation d'un dispositif selon l'une des revendications 1 à 13 pour des études graphologiques.

22. Utilisation d'un dispositif selon l'une des revendications 1 à 13 pour des études de physiologie de mouvement.

23. Utilisation d'un dispositif selon l'une des revendications 1 à 13 pour la commande d'un ordinateur, en particulier, par l'influence d'un curseur sur son moniteur.
